# EUROPÄISCHE PATENTSCHRIFT

(11) **EP 0 914 931 B1**
(45) Veröffentlichungstag und Bekanntmachung des Hinweises auf die Patenterteilung: **25.09.2002**
(21) Anmeldenummer: 98119837.7
(22) Anmeldetag: 20.10.1998
(51) Int. Cl.: B29C 51/26, B29C 51/04

(54) **Formwerkzeug**
Moulding tool
Outil a moulage

(30) Priorität: 07.11.1997 DE 19749257
(43) Veröffentlichungstag der Anmeldung: 12.05.1999
(73) Patentinhaber: Adolf Illig Maschinenbau GmbH & Co. KG, 74081 Heilbronn (DE)
(72) Erfinder: Wagner, Hans Dieter Dr., 74626 Bretzfeld-Waldbach (DE); Rücker, Dieter, 74211 Leigarten (DE); Faltum, Gregor, 71665 Vaihingen/Enz (DE)

(56) Entgegenhaltungen:
- US-A- 3 172 159
- US-A- 3 342 914
- US-A- 3 955 266
- US-A- 5 641 524

## Beschreibung

Die Erfindung betrifft ein Formwerkzeug zum Tiefziehen von Behältern aus einer erwärmten thermoplastischen Kunststoffolie nach der Gattung des Hauptanspruches. Ein solches Formwerkzeug wird in die Formstation einer Thermoformmaschine eingebaut. Die Verfahrensabläufe des Werkzeuges werden als bekannt vorausgesetzt und sind z. B. in der DE-OS 21 45 250 näher beschrieben. Bei dem Werkzeug handelt es sich um ein nur formendes oder um ein kombiniert formendes und stanzendes Werkzeug, wobei das Stanzen in Form eines Durchfallschnittes oder über ein Stanzmesser erfolgen kann.

Die Erfindung betrifft insbesondere die Verbindung zwischen Streckhelfer und Stange, über die er von einer Antriebseinrichtung axial verschoben werden kann. Aus der DE-OS 21 45 250 ist es bekannt, Stange und Streckhelfer mit einem Gewinde zu versehen und beide Teile zu verschrauben. Das Gewinde im Streckhelfer kann sich dabei in einem Gewindeeinsatz befinden, der im Streckhelfer sitzt. Dies ist dann vorteilhaft, wenn der Streckhelfer aus Kunststoff, Holz oder Schaummaterial besteht, also aus einem Werkstoff, in den eine lösbare Gewindeverbindung nicht direkt eingebracht werden sollte.

Eine solche Schraubverbindung eignet sich nur für rotationssymmetrische Streckhelfer, da dabei keine definierte Stellung zwischen Stange und Streckhelfer erforderlich ist. Bei einer nicht rotationssymmetrischen Gestalt des Streckhelfers ist es deshalb bekannt (DE-OS 28 46 426), die Stange mit einem Bund zu versehen, so daß der Bund über mehrere Schrauben mit dem Streckhelfer verschraubt werden kann.

Aus der US-A-3 342 914 ist es bekannt, die Streckhelfer mit einer Schraube mit der Trägerplatte zu verbinden. Das Vorsehen einer Schnellwechseleinrichtung auf der Rückseite der Trägerplatte scheitert an der Zugänglichkeit und der Erreichbarkeit dieses Bereiches, insbesondere bei größeren Thermoformmaschinen, da diese Trägerplatte Teil des Formwerkzeuges ist und an einer Brücke in der Formstation der Thermoformmaschine befestigt wird.
Die Streckhelfer können bei diesem Formwerkzeug nicht relativ zu der Formwerkzeughälfte bewegt werden, an der sie sitzen, was verfahrenstechnische Nachteile hat.

In allen Fällen ist es erforderlich, zum Lösen der Streckhelfer Werkzeug einzusetzen. Es sind mehrere Umdrehungen erforderlich, um die Verbindung zu lösen bzw. herzustellen.

Solche Demontagen sind in der Praxis erforderlich, wenn sich beim Einfahren eines Werkzeuges herausstellt, dass die Kontur des Streckhelfers zur Erzielung eines Behälters mit optimaler Wandstärkenverteilung nachgearbeitet werden muss. Formwerkzeuge zur Herstellung von Massenartikeln wie Trinkbecher, Joghurtbecher, Margarinebecher und anderen weisen heute eine Vielzahl von Formnestem auf, oft in zwei, drei oder vier Reihen. Kavitätszahlen von 24 pro Werkzeug sind keine Seltenheit. Aus- und Einbau der Streckhelfer dauern deshalb recht lange, wenn alle nachgearbeitet werden müssen. Während dieser Zeit steht die im Stundensatz recht teure Formmaschine.

Zum Aus- und Einbau der Streckhelfer wird das Formwerkzeug in geöffnete Stellung gebracht und die Streckhelfer werden durch die Antriebseinrichtung nach unten gefahren. Drehbewegungen zum Lösen der Schraubverbindungen finden ihre Begrenzung an benachbarten Streckhelfern und deren Bauteile, so dass der Zeitaufwand weiter steigt.

Während der Produktion kann es zur Beschädigung/Abnutzung einzelner Streckhelfer kommen, so dass einzelne oder mehrere Streckhelfer ausgewechselt werden müssen. Befinden sich diese an einer ungünstigen Stelle - z. B. in einer Mittelreihe - ist die Verbindungsstelle kaum oder gar nicht zugänglich.

Gegebenenfalls müssen erst noch funktionsfähige Streckhelfer ausgebaut werden, um diese Stelle zugänglich zu machen. Dies alles verlängert die Stillstandzeit der Formmaschine.

Eine Schraubverbindung neigt bei entsprechenden Erschütterungen - und diesen sind Formmaschinen vor allem bei kombiniert formendem/stanzendem Betrieb ausgesetzt - zum unbeabsichtigten Lösen.

Wenn dies eintritt, sitzen die Streckhelfer nach entsprechendem Lockern beim Formen auf dem Boden der Tiefziehformen auf und werden beschädigt.

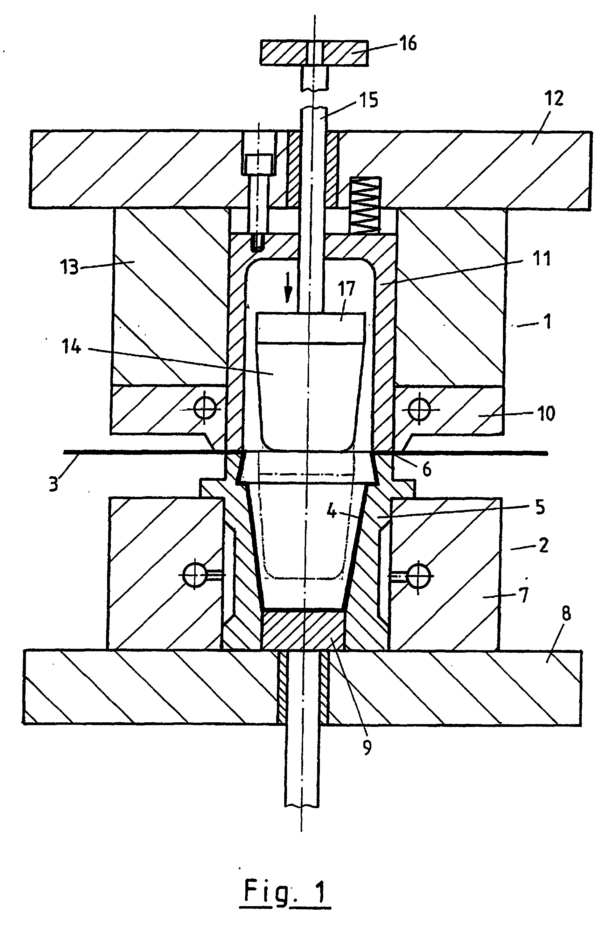

Der Erfindung liegt die Aufgabe zugrunde, eine schnell lösbare Streckhelfer/Stange - Kupplung zu finden. Auch einzelne, in der Mitte von mehreren Streckhelfern sitzende Streckhelfer sollten rasch ausgetauscht werden können. Dabei sollte die Verbindung so sicher sein, dass kein unbeabsichtigtes Lösen eintreten kann.
Zur Lösung der Aufgabe wird vorgeschlagen, zwischen Stange und Streckhelfer ein von Hand oder mit einfachen Hilfsmitteln zu betätigendes Kupplungselement vorzusehen. Durch eine einfache, lineare Bewegung eines Bauteils, ggf. nach Aufhebung einer Sperre, ist die Verbindung zu lösen, die Kupplung erfolgt je nach Ausbildung des Kupplungselementes ebenfalls durch eine einfache Bewegung eines Bauteils oder selbsttätig durch Einrasten.
Ausführungsbeispiele der Erfindung sind in den Figuren 1 bis 9 dargestellt. Es zeigt:
- Figur 1: einen Querschnitt durch ein kombiniertes Form-/Stanzwerkzeug
- Figur 2-11: verschiedene Ausführungsformen des Kupplungselementes zwischen Stange und Streckhelfer.

Das Formwerkzeug besteht aus einem Oberteil 1 und einem Unterteil 2, die relativ zueinander verschiebbar sind und im Zusammenwirken eine Folie 3 zu einem Behälter 4 tiefziehen und diesen ggf. ausstanzen. Hierzu weist das Unterteil 2 auf den eigentlichen Formeinsatz 5 mit einer Schnittkante 6, die Aufnahme 7 und die Grundplatte 8 sowie je Formnest einen höhenbeweglichen Formboden 9. Das Oberteil 1 setzt sich zusammen aus der Matrize 10, den Niederhalter 11, der Kopfplatte 12, der Zwischenplatte 13 und einem Streckhelfer 14 pro Formnest.

Formwerkzeuge mit mehreren Formnestern in einer Reihe und mit mehreren Reihen sind bekannt.

Jeder Streckhelfer 14 ist mit einer Stange 15 verbunden, alle Stangen 15 sitzen an einer Platte 16. Diese Platte 16 kann über eine nicht dargestellte Antriebseinrichtung axial verschoben werden, so daß die Streckhelfer 14 in die Formnester zur mechanischen Vorstreckung der Folie 3 verschoben werden können (strichpunktiert dargestellt). Zwischen Stange 15 und Streckhelfer 14 ist ein Kupplungselement 17 angeordnet, das mit dem Streckhelfer 14 verbunden ist und eine Einrichtung aufweist, um die Stange 15 formschlüssig ergreifen zu können.

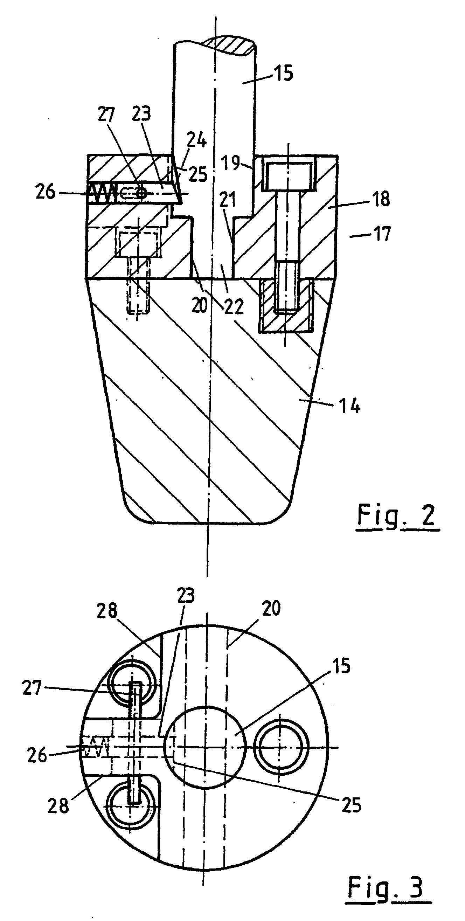

In den Figuren 2 und 3 ist eine Ausführung des Kupplungselementes 17 dargestellt. Das Kupplungselement 17 besteht aus einer mit dem Streckhelfer 14 verschraubten Platte 18 mit einer zentralen Bohrung 19, die bis zu einer an der Unterseite der Platte 18 eingefrästen Nut 20 reicht. An der Unterseite weist die Stange 15 beidseitig eine Abfräsung 21 auf, so daß ein Absatz 22 in der Breite der Nut 20 entsteht. Durch Absatz 22 und Nut 20 entsteht so eine Justierung beider Teile zueinander. Diese Justierung ist erforderlich, wenn nicht rotationssymmetrische Streckhelfer 14, z. B. bei der Herstellung von Margarinebechern, eingesetzt werden. Bei rotationssymmetrischen Streckhelfern 14 könnte auf diese Justierung verzichtet werden. Allgemein hat die Justierung aber auch noch die Aufgabe, daß die Verriegelungseinrichtung am Kupplungselement an entsprechend richtiger Stelle auf Ausnehmungen am unteren Ende der Stange 15 trifft.

Zur Verbindung von Stange 15 mit Platte 18 dient ein horizontal verschiebbarer Stift 23 mit einer Schräge 24, der in eine Kerbe 25 in der Stange 15 eingreift. Eine Feder 26 drückt den Stift 23 in Richtung Stange 15. Über einen an ihm befestigten Querstift 27, der durch je ein Langloch nach außen ins Freie geführt ist, kann eine Entriegelung von Hand vorgenommen werden. Dazu weist die Platte 18 entsprechende Aussparungen 28 auf, so daß der Querstift 27 von außen zugänglich ist. Der Querschnitt 27 bietet auf diese Weise gleichzeitig Verdrehsicherheit für den Stift 23. Bedingt durch die Schräge 24 rastet die Stange 25 allein durch Einschieben in die Bohrung 19 ein.

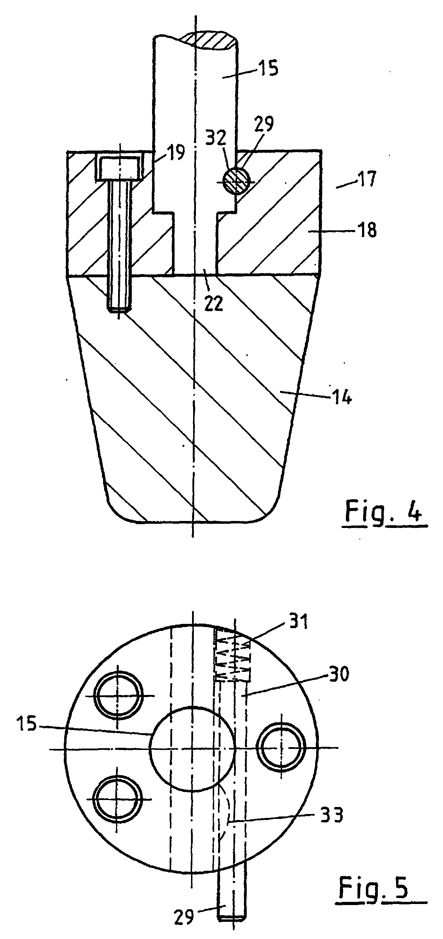

Bei dem in den Figuren 4 und 5 gezeigten Kupplungselement ist der Grundaufbau ähnlich den Figuren 3 und 4, so daß gleiche Bezugsziffern für gleiche Teile verwendet wurden. Eine Verrastung erfolgt durch einen Stift 29, der in einer Querbohrung 30 verschiebbar und über eine Feder 31 nachgiebig erhalten ist. Er trifft am Umfang auf die Stange 15, die eine Ausnehmung 32 aufweist. Eine analoge Ausnehmung 33 weist der Stift 29 auf, die nach Verschiebung des Stiftes 29 gegen die Feder 31 im Bereich der Stange 15 zu liegen kommt, so daß der Streckhelfer 14 abgezogen werden kann. Wenn der Stift 29 über die Platte 18 vorsteht wie in Figur 5 dargestellt, kann das Entriegeln und Verriegeln per Hand erfolgen. Ist der Stift 29 aus Platzgründen bündig mit der Außenkante der Platte 18, wird zur Betätigung ein einfaches Werkzeug (z. B. Stift, Schraubendreher), verwendet.

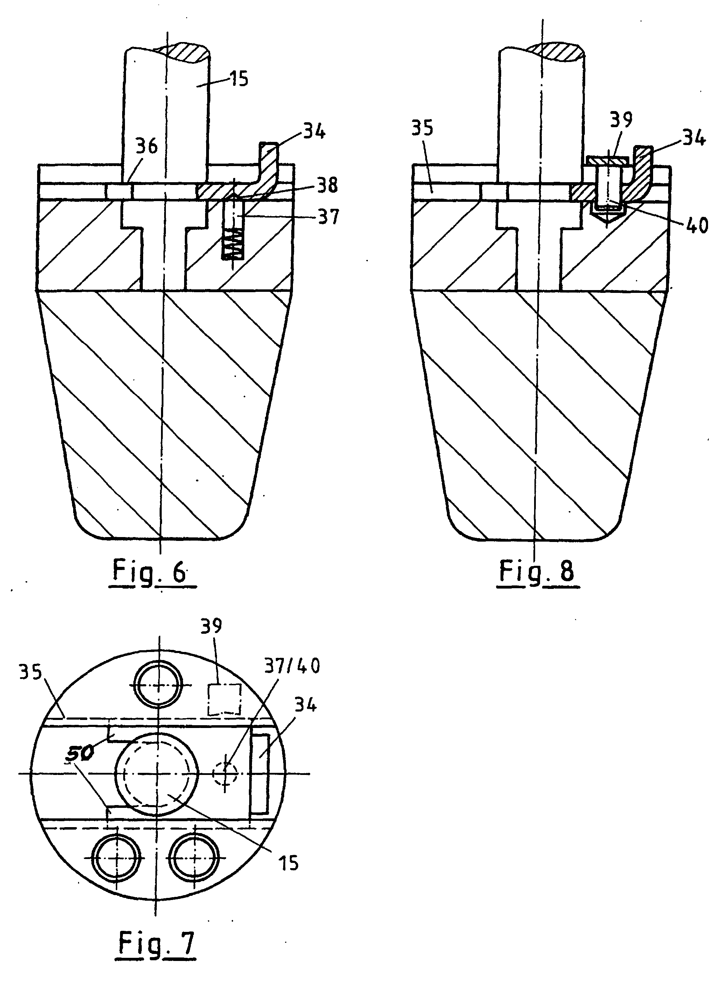

In den Figuren 6 bis 8 ist eine Kupplungsmöglichkeit durch einen Schieber 34 dargestellt. Dazu ist in der Platte 18 eine T-förmige Nut 35 eingearbeitet, in der der Schieber 34 gleitet. Die Stange 15 weist eine ringförmige Nut 36 auf, in die der Schieber 34 mit seinen beiden Zungen 50 an gegenüberliegenden Stellen eingreift. Eine Entriegelung/Verriegelung erfolgt durch Verschieben des Schiebers 34. Zwei Lösungen zur Arretierung des Schiebers 34 sind in den Figuren 6 und 8 dargestellt. Gemäß Figur 6 ist in der Platte 18 ein federnd gelagerter Druckstift 37 vorgesehen, der in eine Einsenkung 38 im Schieber 34 eingreift. Figur 8 zeigt eine von Hand zu betätigende Zunge 39 mit einem daran befestigten Bolzen 40, der in eine Bohrung im Schieber 34 eingreift.

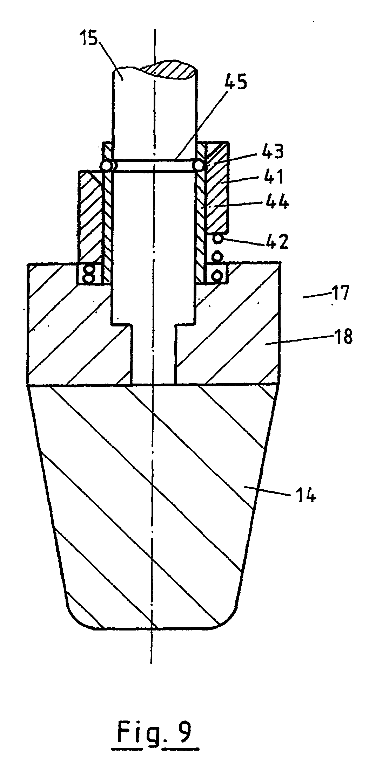

Gemäß Figur 9 wird das Kupplungselement 17 dadurch gebildet, daß an der Platte 18 eine von einer Feder 42 betätigte, axial verschiebbare Hülse 41 angeordnet ist, die mit ihrer inneren Bohrung auf Kugeln 43 drückt. Diese sind in einem Kugelkäfig 44 nachgiebig gehalten und greifen in eine Ringnut 45 ein, die an der Stange 15 eingedreht ist. Nach einer Verschiebung der Hülse 41 gegen die Kraft der Feder 42 werden die Kugeln 43 frei und können soweit nach außen gleiten, daß der Streckhelfer 14 von der Stange 15 abgezogen werden kann. Beide Stellungen verriegelt/entriegelt sind dargestellt.

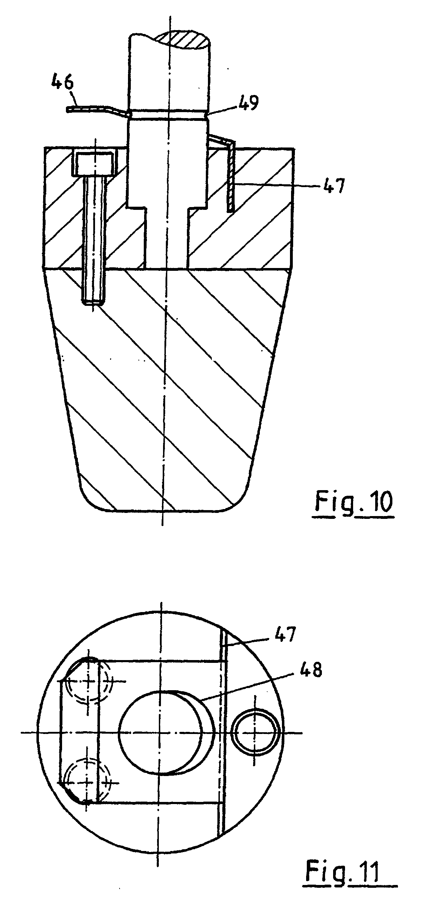

In den Figuren 10 und 11 ist eine Verriegelung über eine Blattfeder 46 dargestellt, die in einem Schlitz 47 in der Platte 18 eingesteckt und darin befestigt ist. Sie weist ein Langloch 48 auf, durch das die Stange 15 geführt ist. Die Stange 15 liegt am Ende des Langloches 48 im gespannten Zustand der Blattfeder 46 an. Durch Drücken der Blattfeder 46 in Pfeilrichtung erfolgt eine Entriegelung der Verbindungsstange 15/Kupplungselement 17, so daß der Streckhelfer 14 abgezogen bzw. aufgesteckt werden kann. Bedingt durch die Vorspannung der Blattfeder 46 nach ihrem Loslassen erfolgt ein sicheres Festhalten der Stange 15, das durch Eindrehen einer Ringnut 49 noch positiv beeinflußt werden kann.

## Patentansprüche

1. Formwerkzeug zum Tiefziehen von Behältern aus einer erwärmten thermoplastischen Kunststorffolie, bestehend aus zwei Formhälften, wobei eine Formhälfte die Tiefziehform trägt, die andere Formhälfte pro Formnest einen in Axialrichtung zur zugeordneten Formhälfte verschiebbaren Streckhelfer, der über eine Stange mit der ihn bewegenden Antriebseinrichtung verbunden ist, **gekennzeichnet durch** ein an jedem Streckhelfer (14) befestigtes Kupplungselement (17) mit von Hand oder mit einfachen Werkzeugen linear verschiebbaren Bauteilen (23, 29, 34, 41), deren Verschiebung direkt oder indirekt eine formschlüssige Verbindung zwischen Stange (15) und Streckhelfer (14) herbeiführt.

2. Formwerkzeug nach Anspruch 1, **dadurch gekennzeichnet, dass** eine Fixierung gegen Verdrehung zwischen Stange (15) und Kupplungselement (17) vorgesehen ist.

3. Formwerkzeug nach Anspruch 2, **dadurch gekennzeichnet, dass** die Stange (15) an ihrem dem Kupplungselement (17) zugewandten Ende einen Absatz (22) mit zwei Flächen (21) aufweist, deren Abstand der Breite einer Nut (20) im Kupplungselement (17) entspricht.

4. Formwerkzeug nach einem der Ansprüche 1 bis 3 **dadurch gekennzeichnet, daß** das Kupplungselement (17) aus einer Platte (18) besteht, die mit dem Streckhelfer (14) verbunden und die als Führung für die verschiebbaren Bauelemente (23, 29, 34, 41) ausgebildet ist und die in der Mitte eine Bohrung (19) zur Aufnahme der Stange (15) aufweist.

5. Formwerkzeug nach Anspruch 4 **dadurch gekennzeichnet, daß** die Platte (18) eine radiale Bohrung zur Aufnahme und Führung eines gefederten Stiftes (23) aufweist, wobei die Vorderkante des Stiftes (23) in Eingriff mit einer Kerbe (25) in der Stange (15) bringbar ist.

6. Formwerkzeug nach Anspruch 5 **dadurch gekennzeichnet, daß** der Stift (23) mit einem Querstift (27) verbunden ist, der nach außen zu Aussparungen (28) in der Platte (18) führt, so daß er von Hand ergriffen oder mit einfachen Werkzeugen verschoben werden kann.

7. Formwerkzeug nach Anspruch 4 **dadurch gekennzeichnet, daß** die Platte (18) eine quer verlaufende Bohrung zur Aufnahme eines gefederten Stiftes (29) aufweist, wobei dieser Stift (29) eine Aussparung (33) aufweist, die durch Betätigung des Stiftes (29) entgegen einer Feder (31) in Deckung mit einer Ausnehmung (32) in der Stange (15) gebracht werden kann.

8. Formwerkzeug nach Anspruch 7 **dadurch gekennzeichnet, daß** der Stift (29) in unbetätigtem Zustand über die Außenkante der Platte (18) vorsteht.

9. Formwerkzeug nach Anspruch 4 **gekennzeichnet durch** eine T-förmige Nut (35) in der Platte (18) zur Aufnahme und Führung eines Schiebers (34), der in eingeschobenem Zustand mit einer Nut (36) in der Stange (15) in Eingriff gebracht werden kann.

10. Formwerkzeug nach Anspruch 9 **gekennzeichnet durch** eine Einrichtung zur Fixierung des Schiebers (34) in eingeschobenem Zustand.

11. Formwerkzeug nach Anspruch 10 **dadurch gekennzeichnet, daß** die Einrichtung zur Fixierung des Schiebers (34) aus einem gefederten Druckstift (37) besteht, der mit seiner Spitze in eine Einsenkung (38) im Schieber (34) eingreift.

12. Formwerkzeug nach Anspruch 10 **dadurch gekennzeichnet, daß** die Einrichtung zur Fixierung des Schiebers (34) aus einem an einer federnden Zunge (39) befestigten Bolzen (40) besteht, der mit einer Bohrung im Schieber (34) in Eingriff gebracht werden kann.

13. Formwerkzeug nach Anspruch 4 **gekennzeichnet durch** eine in Axialrichtung an der Platte (18) verschiebbar gehaltenen, gefederten Hülse (41), die in einem Kugelkäfig (44) nachgiebig gehaltene Kugeln (43) in Eingriff mit einer Ringnut (45) in der Stange (15) bringt.

14. Formwerkzeug nach Anspruch 4 **gekennzeichnet durch** eine an der Platte (18) befestigte Blattfeder (46) mit Langloch (48) zur Durchführung der Stange (15), wobei die Blattfeder in Axialrichtung der Stange (15) verschiebbar ist und die Innenkante des Langloches (48) bei nicht verschobener Blattfeder (48) in Kontakt mit der Stange (15) steht.

15. Formwerkzeug nach Anspruch 14 **gekennzeichnet durch** eine im Bereich der Berührungsstelle Blattfeder (46)/Stange (15) angeordnete Ringnut (49).

## Claims

1. Mould tool for deep-draw moulding of containers from a heated thermoplastic synthetic material foil, consisting of two mould halves, wherein one mould half carries the deep-drawing mould and the other mould half carries per mould nest a stretching aid which is displaceable in axial direction relative to the associated mould half and is connected by way of a rod with the drive device which moves it, **characterised by** a coupling element (17), which is fastened to each stretching aid (14), with components (23, 29, 34, 41) which are linearly displaceable manually or by simple tools and the displacement of which directly or indirectly produces a mechanically positive connection between rod (15) and stretching aid (14).

2. Mould tool according to claim 1, **characterised in that** a fixing against rotation is provided between rod (15) and coupling element (17).

3. Mould tool according to claim 2, **characterised in that** the rod (15) has at its end facing the coupling element (17) a projection (22) with two surfaces (21), the spacing of which corresponds with the width of a groove (20) in the coupling element (17).

4. Mould tool according to one of claims 1 to 3, **characterised in that** the coupling element (17) consists of a plate (18), which is connected with the stretching aid (14) and which is constructed as a guide for the displaceable components (23, 29, 34, 41) and has in the centre a bore (19) for reception of the rod (15).

5. Mould tool according to claim 4, **characterised in that** the plate (18) has a radial bore for receiving and guiding a spring-loaded pin (23), wherein the front edge of the pin (23) can be brought into engagement with a notch (25) in the rod (15).

6. Mould tool according to claim 5, **characterised in that** the pin (23) is connected with a transverse pin (27) which is led outwardly to cut-outs (28) in the plate (18) so that it can be gripped by hand or displaced by simple tools.

7. Mould tool according to claim 4, **characterised in that** the plate (18) has a transversely extending bore for receiving a spring-loaded pin (29), wherein this pin (29) has a cut-out (33) which can be brought into coincidence with a recess (32) in the rod (15) by actuation of the pin (29) against a spring (31).

8. Mould tool according to claim 7, **characterised in that** the pin (28) in unactuated state protrudes beyond the outer edge of the plate (18).

9. Mould tool according to claim 4, **characterised by** a T-shaped groove (35) in the plate (18) for receiving and guiding a slide (34) which in the pushed-in state can be brought into engagement with a groove (36) in the rod (15).

10. Mould tool according to claim 9, **characterised by** a device for fixing the slide (34) in the pushed-in state.

11. Mould tool according to claim 10, **characterised in that** the device for fixing the slide (34) consists of a spring-loaded pressure pin (37), which engages by its tip in a depression (38) in the slide (34).

12. Mould tool according to claim 10, **characterised in that** the device for fixing the slide (34) consists of a bolt (40) which is fastened to a resilient tongue (39) and can be brought into engagement with a bore in the slide (34).

13. Mould tool according to claim 4, **characterised by** a spring-loaded sleeve (41) which is mounted at the plate (18) to be displaceable in axial direction and which brings balls (43), which are retained in a ball cage (44) to be capable of yielding, into engagement with an annular groove (45) in the rod (15).

14. Mould tool according to claim 4, **characterised by** a leaf spring (46), which is fastened to the plate (18), with a slot (48) for guidance through of the rod (15), wherein the leaf spring is displaceable in the axial direction of the rod (15) and the inner edge of the slot (48) is disposed in contact with the rod (15) when the leaf spring (48) is not displaced.

15. Mould tool according to claim 14, **characterised by** an annular groove (49) arranged in the region of the point of contact of leaf spring (46) and rod (15).

## Revendications

1. Outil de moulage pour l'étirage profond de récipients à partir d'une feuille de matière thermoplastique chauffée, outil composé de deux moitiés, l'une des moitiés du moule portant le moule d'étirage profond et l'autre moitié étant munie pour chaque cavité de moule, d'un dispositif d'aide à l'étirage, coulissant dans la direction axiale par rapport à la moitié correspondante de moule, ce dispositif étant relié par une tige à un moyen d'entraînement qui le déplace,
**caractérisé par**
un élément de couplage (17) fixé à chaque dispositif d'aide à l'étirage (14), avec des composants (23, 29, 34, 41) à coulissement linéaire, effectué à la main ou avec des outils simples, et dont le coulissement produit une liaison par la forme directe ou indirecte entre la tige (15) et le dispositif d'aide à l'étirage (14).

2. Outil de moulage selon la revendication 1,
**caractérisé par**
un blocage en rotation entre la tige (15) et l'élément de couplage (17).

3. Outil de moulage selon la revendication 2,
**caractérisé en ce que**
l'extrémité de la tige (15) tournée vers l'élément de couplage (17) comporte un prolongement (22) à deux surfaces (21) dont l'écartement correspond à la largeur d'une rainure (20) réalisée dans l'élément de couplage (17).

4. Outil de moulage selon l'une quelconque des revendications 1 à 3,
**caractérisé en ce que**
l'élément de couplage (17) est formé d'une plaque (18) reliée au dispositif d'aide à l'étirage (14) et cette plaque est réalisée comme moyen de guidage pour les composants coulissants (23, 29, 34, 41) et cette plaque comporte en son milieu un perçage (19) pour recevoir la tige (15).

5. Outil de moulage selon la revendication 4,
**caractérisé en ce que**
la plaque (18) comporte un perçage radial pour recevoir et guider une broche (23) à ressort, l'arête avant de la broche (23) venant en prise avec une encoche (25) de la tige (15).

6. Outil de moulage selon la revendication 5,
**caractérisé en ce que**
la broche (23) est reliée à une goupille (27) sortant de découpes (28) réalisées dans la plaque (18) pour pouvoir être prise à la main ou être déplacée avec des outils simples.

7. Outil de moulage selon la revendication 5,
**caractérisé en ce que**
la plaque (18) comporte une broche (29) à ressort dirigée transversalement aux perçages de réception, et cette broche (29) comporte une découpe (33) qui, par actionnement de la broche (29) contre un ressort (31) peut être mise en concordance avec une cavité (32) de la tige (15).

8. Outil de moulage selon la revendication 7,
**caractérisé en ce que**
la broche (29) déborde du bord extérieur de la plaque (18) lorsqu'elle n'est pas actionnée.

9. Outil de moulage selon la revendication 4,
**caractérisé par**
une rainure (35) en forme de T réalisée dans la plaque (18) pour recevoir et guider un poussoir (34) qui peut être mis en prise avec une rainure (36) de la tige (15) lorsqu'il est enfoncé.

10. Outil de moulage selon la revendication 9,
**caractérisé par**
une installation de blocage du poussoir (34) à l'état enfoncé.

11. Outil de moulage selon la revendication 10,
**caractérisé en ce que**
l'installation de blocage du poussoir (34) se compose d'une broche à ressort (37) dont la pointe pénètre dans un enfoncement (38) du poussoir (34).

12. Outil de moulage selon la revendication 10,
**caractérisé en ce que**
l'installation de blocage du poussoir (34) se compose d'un goujon (40) fixé à une languette à ressort (39), ce goujon venant en prise avec un perçage du poussoir (34).

13. Outil de moulage selon la revendication 4,
**caractérisé par**
un manchon à ressort (41) maintenu coulissant dans la direction axiale sur la plaque (18), ce manchon comportant des billes (43) maintenues de manière souple dans une cage à billes (44) pour venir en prise dans une rainure annulaire (45) de la tige (15).

14. Outil de moulage selon la revendication 4,
**caractérisé par**
un ressort lame (46) fixé à la plaque (18) et ayant un trou oblong (48) pour le passage de la tige (15), le ressort lame pouvant coulisser dans la direction axiale de la tige (15) et l'arête intérieure du trou oblong (48) étant en contact avec la tige (15) lorsque le ressort lame (48) n'est pas déplacé.

15. Outil de moulage selon la revendication 14,
**caractérisé par**
une rainure annulaire (48) prévue au niveau du point de contact entre le ressort lame (46) et la tige (15).
